# EUROPEAN PATENT APPLICATION

(11) **EP 2 227 969 A1**
(43) Date of publication of application: **15.09.2010**
(21) Application number: 09100173.5
(22) Date of filing: 10.03.2009
(51) Int. Cl.: A23L 1/314, A23L 1/325

(54) **Use of alkali metal lactate in curing of seafood surimi products**

(71) Applicant: PURAC Biochem BV, 4206 AC Gorinchem (NL)
(72) Inventor: Kroon, Harmen, 2954 AG, Alblasserdam (NL); Ide, Shingo, Tokyo (JP); Galligan III, William Joseph, Midlothian, VA 23112 (US); Akimoto, Naohiro, Saitama, Saitama (JP)
(74) Representative: van Heuvel, Margaretha

(57) **Abstract**

The present invention discloses a method for the preparation of a cured seafood surimi product comprising: providing raw fish surimi; mixing the raw surimi with an alkali metal lactate in an amount of 0.1 to 10 % (w/w), and an additional ingredient as desired; curing the mixture of raw fish surimi, alkali metal lactate and additional ingredient; and, optionally, further processing the cured surimi product. The alkali metal lactate preferably is potassium lactate. The alkali metal lactate improves the texture of the cured seafood surimi product.

## Description

The present invention relates to processes for the preparation of cured seafood surimi products.

Cured seafood surimi products, such as kamaboko, crabstick and fish ball, typically require a high elastic and resilient texture. It is the gel structure that accounts for the textural strength and elasticity of the surimi product, as well as the entrapment of water, fat, and other food constituents.

The primary ingredient for the preparation of cured surimi seafood products is raw fish surimi, which is composed of highly concentrated myofibrillar fish muscle proteins, primarily actomyosin. Freshness, fishing methods, season, size, and species are some of the factors that determine the gel-forming ability of fish muscle proteins. The texture of a surimi product prepared from a given raw surimi is further affected by the moisture content of the raw surimi, levels of added ingredients (for example salts, cryoprotectants, starch, proteins), extent of actomyosin solubilisation, pH, and heating parameters.

Raw surimi is prepared from fillet of fresh-caught oceanic fish of certain classes. Fish fillet for surimi should have a low fat content and be of high density, and the flesh should be white, there should preferably be no dark flesh. That is the reason why not all classes of fish are ideal for the preparation of surimi. The best quality surimi is produced of codfishes (Alaska Pollack, hake and whiting) as well as of some tropical fish (bream, croaker). Pacific horse mackerel, pilchard, giant squid, spotted tail grinner, etc. are also suitable for surimi preparation. However, surimi made of these fish classes either possesses less jellifying capability or has a darker colour.

Fish should preferably be processed into raw surimi not later than 6-10 hours after it is caught. Often, the fish is processed on a ship during cruising.

For the preparation of raw surimi, fish meat, for instance in the form of fish fillets, is rinsed with water several times to eliminate undesirable odours. The meat is beaten and pulverized (chopped) to form a minced fish mass. Cryoprotectants are added to preserve the properties of the fish protein. The technique of cryoprotection involves the addition of low molecular weight carbohydrates, such as sucrose, sorbitol and/or trehalose, to the dewatered myofibrillar proteins prior to freezing. Also, sodium phosphates may be mixed with cryoprotectant to improve the pH of surimi as well as to chelate metals. During the preparation of raw surimi, the fish fillet does not undergo thermal treatment, so all vitamins and microelements of surimi remain intact. The frozen raw surimi is then transported to the various manufacturers of surimi products in reefer containers having a constantly controlled temperature of -20°C.

JP 10146172 discloses that to resolve the problem of deterioration of the quality of a raw frozen ground fish meat, the frozen ground fish meat is produced by adding a mixture of saccharides, an alkali metal lactate and a polymerized phosphate to a ground fish meat prior to freezing.

WO 2005032264 discloses a method for the preparation of a raw frozen fish mass of white fish, suitable for use as starting material for the fish product industry, wherein the fish material provides improved binding and consistency forming properties through the addition of a mixture of an organic acid or a salt thereof and a cryopreservative prior to freezing.

The inventors of the present invention now have surprisingly found that the addition of an alkali metal lactate salt in a process to prepare a cured seafood surimi product from raw fish surimi, wherein the alkali metal lactate salt is mixed with the raw surimi just prior to the curing step, significantly increases the texture of the cured surimi product, as measured by an increase in the gel strength. It is thereby found not necessary to add the alkali metal lactate together with a cryoprotectant prior to freezing the raw surimi, as is taught by the prior art. One advantage of an increased gel strength of a cured surimi product is that the amount of expensive Alaska Pollock surimi may be partially replaced by a cheaper quality of surimi base.

Thus, in one aspect, a method for the preparation of a cured seafood surimi product from raw fish surimi is disclosed comprising curing the raw surimi in the presence of an alkali metal lactate, wherein, unlike the teachings of the prior art, the alkali metal lactate is mixed with the raw surimi just prior to the process of curing of the raw surimi to form a cured surimi product.

Preferably, the alkali metal lactate is mixed with the raw surimi simultaneously with the additional ingredients that are necessary to prepare a particular surimi product of choice.

In particular, the method comprises:
providing raw fish surimi;
mixing the raw surimi with an alkali metal lactate in an amount of 0.1 to 10 % (w/w), and with an additional ingredient as desired;
curing the mixture of raw fish surimi, alkali metal lactate and additional ingredient;
optionally further processing the cured surimi product.

A preferred alkali metal lactate is potassium lactate or sodium lactate. Potassium lactate is especially preferred, since potassium lactate provides a surimi product having a higher gel strength than when sodium lactate is used.

As a starting material for the process as described herein, raw surimi is used. The term "raw surimi" is meant to define a fish protein product predominantly comprising myofibrillar fish muscle proteins and being in a raw, uncooked form. The total protein content of raw surimi typically ranges from 10 to 20 % (w/w), such as from 12 to 18% (w/w). The ratio of functional myofibrillar to total protein in raw surimi typically may be approximately 80 % just after its preparation. The ratio may decrease during storage due to denaturation of the functional protein, depending on the storage conditions, for example the temperature and the presence of cryoprotectants. Usually, the raw surimi is kept in frozen form.

To prepare raw surimi, fish meat, for instance in the form of fish fillets, is rinsed with water several times to eliminate undesirable odours and remove non-fibrillar protein. The meat is beaten and pulverized (chopped) to form a minced fish mass. Additives like salts and/or cryoprotectants are added. The minced fish mass most often is formed into blocks and frozen, implicating that the raw surimi most often is provided in frozen form.

In the method as described herein, the raw surimi is mixed with water and/or one or more additional ingredients as desired. Prior to and/or during the mixing, the raw surimi is thawed when provided in frozen form. The raw surimi may also be briefly homogenized prior to mixing. The amount of water and type of additional ingredient may depend on the desired texture and flavour of the cured surimi product. Suitable additional ingredients may comprise starch, egg white, salt, vegetable oil, humectants, sorbitol, sugar, soy protein, enzymes such as transglutaminases, seasonings, seafood flavours, and taste enhancers such as monosodium glutamate (MSG).

Alkali metal lactate is mixed with the raw surimi in an amount of 0.1 to 10 % (w/w), preferably 0.5 to 5% (w/w), more preferably 1 to 4% (w/w), based on the total weight of the raw surimi composition subjected to curing. The alkali metal lactate may be added as a separate ingredient, but preferably is added together with the additional ingredients as mentioned above.

Mixing of the raw surimi, alkali metal lactate and additional ingredients may be done using any suitable mixing device, for instance a silent bowl cutter. The mixing preferably is done at a temperature below 10 °C, for a time period suitable to obtain a homogeneous mixture, for instance 5 to 20 minutes.

The resulting mixture of raw surimi, alkali metal lactate and additional ingredients is cured and then further processed as desired.

The curing of the mixture of raw surimi, alkali metal lactate and additional ingredients encompasses a thermal treatment and, optionally, a setting step prior to the thermal treatment. The mixture of raw surimi, alkali metal lactate and additional ingredients may further be formed in a shape as desired, preferably prior to the setting step.

Setting is performed at a relatively low temperature, for instance 5-40 °C, for a suitable time period to obtain gel setting, for instance at least about 30 minutes. The upper limit for the setting period may not be critical and may be up to about 24 hours.

It is also an option to store the mixture of raw surimi, alkali metal lactate and additional ingredients in refrigerated or frozen form, optionally formed in a shape as desired and/or optionally subjected to setting as described above, for keeping and/or selling as a semi-finished product. The semi-finished product then may be subjected to thermal treatment at any suitable later stage.

Thermal treatment of the mixture of raw surimi, alkali metal lactate and additional ingredients, optionally subjected to setting as described above and/or optionally formed in a shape as desired, is done under conditions known in the art for obtaining a cured surimi product.

Briefly, the mixture of raw surimi, alkali metal lactate and additional ingredients is heated to a temperature of about 70 to about 100 °C, for a suitable time period to obtain a cured product. The heating time may thereby depend on the applied temperature and the diameter of the product to be cured. Typically, the heating time may be from about 5 seconds to about 30 minutes. After thermal treatment, the cured surimi may be further processed, e.g. by cutting into a desired size, further forming, treating with a colorant, etc.

In a further aspect, a method for improving the texture of a cured seafood surimi product is disclosed wherein the cured surimi product is prepared according to the method of the previous aspect. The gel strength of a surimi product measured as described herein thereby typically is indicative for the texture of the product.

The inclusion of an alkali metal lactate salt as described herein in the preparation of a seafood surimi product advantageously has a positive contribution to the quality of the seafood surimi product. Next to contributing to an improved texture, the antibacterial and preservative properties of alkali metal lactate provide an enhanced keeping quality and shelf life to the seafood surimi product.

### Experimental

### Materials

### Alaska Pollock Surimi, produced by American Seafoods

A grade (gel strength = 825+)

Specification:
91.49 % fish meat (Alaska Pollock, Theragra chalcogramma)
0.14 % sodium tri polyphosphate
0.14 % tetra sodium pyrophosphate
4.57 % sorbitol
3.66 % sugar
Caught in the northeast Pacific Ocean, area 76, trip 2008-02 Production date: February 10, 2008
Analysis: 72.4 % water, 0.1 % fat, 14 % protein, 5 % sugars (mono- and disaccharides), 0.17 % sodium

### Itoyori Surimi, distributed by Multiprosur (Spain)

A grade (gel strength = 500+)

Specification:
94. 5 % fish meat (Threadfin bream, Nemipterus Spp)
5 % sugar
0.2 % sodium tri poly phosphate
0.1 % tetra sodium pyrophosphate
0.2 % egg white powder
Caught in the Pacific Ocean, catch FAO zone Nr 71, batch VN/286/IV
Production date: September 2, 2007
Analysis: 77.5 % water, 0.2 % fat, 14.8 %, protein, 8.9 % sugars (mono- and disaccharides)
Water, Nestlé Aquarel springwater/ Ice, Demi water Wheat starch, Cerestar batch WY 7909
Sodium tri phosphate (M212), Haifa lot 491193 Salt; Fischer S/3120/65, batch: 0570876.
Mono sodium glutamate, Euroma, 30-08-2001
PURASAL HiPure P Plus, Purac, batch number 0707001072 (potassium lactate)
PURASAL S, Purac, batch number 0708002166 (sodium lactate)

### Methods

### Preparation of a casing containing cured surimi

1. Defrost frozen raw surimi at -4 °C for one night (climate cabinet).
2. Mix the surimi by a cutter (Robot coupe r 10 vv).
3. Add all ingredients (salt, msg, water, starch, lactate) and mix again. The temperature is at the most 10 °C to prevent damage of the protein functionality of the surimi.
4. Vacuumize the paste to prevent air pocket forming in the gel matrix.
5. Put the mixture in a PVC film casing of 3 cm.
6. Store for 1 hour at 10 °C.
7. Heat at 88 °C for 30 minutes (Water bath Memmert).
8. Cool in water ice for 10 minutes.
9. Store at 0 °C till measurements.
10. Measure gel strength

### Measurement of gel strength

To determine the gel strength the punch penetration test is used. This test is the most popular gel measurement technique used in the surimi industry for evaluating "gel strength". ( In this test a punch probe is used to compress the surface of a gel cylinder put in a cylinder. The recorded peak force at break and the depth of penetration are used to describe the gel properties. These two values are multiplied to give the gel strength in gram.centimeters. The recorded peak force at break and the depth of penetration were measured with a texture Analyzer brand Stable Micro Systems type TA-XT2*i*.

### TA-XT2i Settings:

| | |
|---|---|
| Mode: | Measure Force in Compression |
| Option: | Return to Start |
| Pre-Test Speed: | 1.0 mm/s |
| Test Speed: | 1.1 mm/s |
| Post-Test Speed: | 10.0 mm/s |
| Distance: | 15 mm |
| Trigger Force: | Auto - 10g |
| Data Acquisition Rate: | 200 pps |

Accessory: 5mm Spherical Probe using 5kg load cell
Sample Preparation: Cut the surimi samples into cylinders of constant dimensions, 30 mm diameter, 25 mm height.
   Remove samples from storage to 20 °C until the internal temperature is 20 °C. Measure product at room temperature (20 °C)
Test Set-Up: Position the sample diametrically under the probe and commence the penetration test
Observations: Once the trigger force of 10g is attained the probe proceeds to penetrate the sample to a distance of 15mm. The force to puncture into the surimi (breaking force) and the distance at which the ball probe punctured into the surimi (breaking distance) are both important values. Traditionally, surimi is measured according to three parameters, maximum force (breaking force), distance to rupture, and "gel strength". "Gel strength" is the peak force in grams multiplied by the distance to the rupture event in centimetres.

### Example 1

### Gel strength of Alaska Pollock surimi in the absence or presence of alkali metal lactate salts

The control Alaska Pollock surimi product has a composition as mentioned in Table 1. Surimi product batches were prepared and the gel strength of the batches was measured according to the Experimental section. The pH of the batches was 7-7.1. Table 2 provides the composition and gel strength of the batches.

**Table 1: Recipes**

| **Ingredient** | **Control** | **PURASAL HiPure** **P PLUS** | **PURASAL S** |
|---|---|---|---|
| Alaska Pollock Surimi | 72.00 | 72.00 | 72.00 |
| Tri sodium phosphate | 0.15 | 0.15 | 0.15 |
| Water/ice | 21.35 | 19.50 | 18.75 |
| NaCl | 2.30 | 2.30 | 2.30 |
| Wheat Starch | 3.80 | 3.80 | 3.80 |
| MSG | 0.40 | 0.40 | 0.40 |
| Lactate | - | 2.00 | 2.60 |
| **TOTAL** | 100.00 | 100.00 | 100.00 |

**Table 2: Gel strength of the surimi product batches**

| **Composition** | **Na- or K-lactate (%)** | **Gel strength (g.cm)** |
|---|---|---|
| Control | - | 301 ± 45 |
| 2% PURASAL HiPure P Plus | 1.56 | 512 ± 36 |
| 4% PURASAL HiPure P Plus | 3.12 | 462 ± 41 |
| 2.6% PURASAL S | 1.56 | 445 ± 47 |

The results show that sodium lactate improves the gel strength of Alaska Pollock surimi and that potassium lactate provides an even higher increase. A two times higher concentration of potassium lactate (3.12%) does not lead to a further increase in gel strength as compared to the product with 1.56% potassium lactate, but provides a somewhat lower gel strength.

### Example 2

### Increase in gel strength of a mixture of high and lower quality surimi by potassium lactate

Surimi product batches were prepared and the gel strength of the batches was measured according to the Experimental section.

**Table 3:Recipes**

| **Ingredient** | **A** | **B** | **C** |
|---|---|---|---|
| Alaska Pollock Surimi | - | 21.60 | 21.60 |
| Itoyori Surimi | 72.00 | 50.40 | 50.40 |
| Tri sodium phosphate | | | |
| Water/ice | 22.10 | 22.10 | 20.10 |
| NaCl | 1.70 | 1.70 | 1.70 |
| Wheat Starch | 3.80 | 3.80 | 3.80 |
| MSG | 0.40 | 0.40 | 0.40 |
| PURASAL HiPure P Plus | - | - | 2.00 |
| **TOTAL** | 100.00 | 100.00 | 100.00 |

**Table 4: Gel strength of the surimi product batches**

| **Composition** | **Gel strength (g.cm)** | | |
|---|---|---|---|
| | Day 0 | After freeze/thaw | Difference |
| A | 358 ± 19 | 142 ± 7 | 216 |
| B | 386 ± 16 | 193 ± 6 | 193 |
| C | 480 ± 27 | 356 ± 14 | 124 |

The results show that surimi product prepared from a mixture of Itoyori and Alaska Pollock raw surimi has only a slightly higher gel strength than that of a surimi product made of Itoyori raw surimi only. However, the addition of potassium lactate to the mixture of Itoyori and Alaska Pollock surimi significantly increases the gel strength of the resulting surimi product. The composition with potassium lactate further showed the lowest decrease in gel strength of all samples after the freeze thaw cycle (gel strength is only lowered by 124 g.cm). The addition of potassium lactate thus protects the surimi product against freeze/thawing effects.

## Claims

1. A method for the preparation of a cured seafood surimi product comprising:
providing raw fish surimi;
mixing the raw surimi with an alkali metal lactate in an amount of 0.1 to 10 % (w/w), and with an additional ingredient as desired;
curing the mixture of raw fish surimi, alkali metal lactate and additional ingredient; and
optionally further processing the cured surimi product.

2. The method according to claim 1, wherein the raw surimi is provided in frozen form and the method comprises thawing the frozen raw surimi prior to and/or during mixing.

3. The method according to claim 1 or 2, wherein the alkali metal lactate is potassium lactate.

4. The method according to any one of the preceding claims, wherein the additional ingredient is selected from the group consisting of starch, phosphates, egg white, salt, vegetable oil, humectants, sorbitol, sugar, soy protein, enzymes, seasonings, seafood flavours and taste enhancers.

5. The method according to any one of the preceding claims, wherein the curing comprises a thermal treatment and, optionally, a setting of the mixture of raw fish surimi, alkali metal lactate and additional ingredient prior to thermal treatment.

6. The method according to any one of the preceding claims, wherein the curing is preceded by forming the mixture of raw fish surimi, alkali metal lactate and additional ingredient into a shape as desired.

7. A method for improving the texture of a fish surimi product, wherein the fish surimi product is prepared according to the method of any one of the preceding claims.

8. A method for preparing a semi-finished product for the preparation of a cured fish surimi product comprising:
providing raw fish surimi;
mixing the raw surimi with an alkali metal lactate in an amount of 0.1 to 10 % (w/w), and with an additional ingredient as desired; and
storing the mixture of raw fish surimi, alkali metal lactate and additional ingredient as semi-finished product under conditions of refrigeration or freezing.

9. The method according to claim 8, wherein the raw surimi is provided in frozen form and the method comprises thawing the frozen raw surimi prior to and/or during mixing.

10. The method according to claim 8 or 9, wherein the mixture of raw fish surimi, alkali metal lactate and additional ingredient is subjected to setting and, optionally, formed into a shape as desired, prior to storing the mixture.
